# EUROPÄISCHE PATENTSCHRIFT

(11) **EP 4 196 847 B1**
(45) Veröffentlichungstag und Bekanntmachung des Hinweises auf die Patenterteilung: **16.04.2025**
(21) Anmeldenummer: 21773690.9
(22) Anmeldetag: 05.08.2021
(51) Int. Cl.: G03B 9/08, G03B 9/36, G03B 9/40

(54) **KAMERAVERSCHLUSSVORRICHTUNG MIT EINEM ZWEISEITIGEN HEBEL**
CAMERA SHUTTER DEVICE HAVING A TWO-ARMED LEVER
DISPOSITIF D'OBTURATEUR DE CAMÉRA À LEVIER À DEUX BRAS

(30) Priorität: 12.08.2020 DE 102020121173
(43) Veröffentlichungstag der Anmeldung: 21.06.2023
(73) Patentinhaber: JENOPTIK Optical Systems GmbH, 07745 Jena (DE)
(72) Erfinder: WEISBACH, Frank, 07747 Jena (DE)
(74) Vertreter: Gleim Petri Patent- und Rechtsanwaltspartnerschaft mbB
(86) Internationale Anmeldenummer: PCT/DE2021/100672
(87) Internationale Veröffentlichungsnummer: WO 2022/033632

(56) Entgegenhaltungen:
- CN-U- 202 748 581
- DE-A1- 2 642 601
- US-A- 3 956 761
- US-A- 4 316 661
- US-A- 4 367 931
- US-A- 4 410 249
- US-A- 6 123 466
- US-B1- 8 956 059
- US-B2- 7 513 702

## Beschreibung

Die Erfindung betrifft eine Verschlussvorrichtung für ein Kameramodul (z.B. ein IR-Kameramodul), insbesondere zur Verwendung in verschiedenen Arten von Fotografie- und Wärmebildgeräten, sowie Geräten zur Messung der Abbildungsgüte von Objektiven und zur Kalibrierung von Bildsensoren, die zur Öffnung und Schließung elektromagnetische Kräfte nutzt, wie sie gattungsgemäß aus der DE 27 07 175 A1 bekannt ist.

In Kameras und optischen Sensoren werden Verschlussvorrichtungen verwendet, um den optischen Strahlengang bei Bedarf zu unterbrechen. Eine wesentliche Herausforderung bei der Konstruktion solcher Verschlussvorrichtungen ist die fortschreitende Miniaturisierung der Kameramodule bei steigenden Anforderungen an die Wärmeentwicklung, Stellzeit, Lebensdauer, Einsatztemperatur, Kosten und dergleichen. Bekannte Lösungen umfassen Iris-Blenden, Schlitzverschlüsse oder schwenkbare oder geführte Verschlusskellen, welche elektromagnetisch oder durch einen Motor angetrieben werden.

Bei Infrarot- oder Wärmebildanwendungen ist es zur Korrektur bestimmter, im laufenden Betrieb der Kamera zeitlich oftmals driftender Detektorparameter notwendig, in gewissen zeitlichen Abständen eine sogenannte "Dark Frame Calibration" vorzunehmen. Dabei wird eine Verschlussvorrichtung geschlossen und das entstehende dunkle Bild zur Offsetkorrektur verwendet. In radiometrischen Kameras dient eine solche Verschlussvorrichtung außerdem als Temperaturreferenz zur Verbesserung der Messgenauigkeit.

Aus der DE 1 447 470 A ist ein elektromagnetisch betätigter Verschlussmechanismus bekannt, bei dem es zwischen einem Öffnungsimpuls und einem Schließimpuls ein bestimmtes Zeitintervall gibt. Das Verschlusselement wird durch Anschläge in einer bestimmten Position gebremst. Dabei führt es nach dem Aufprall, aufgrund der noch vorhandenen kinetischen Energie, Schwingungen aus. Diese können dazu führen, dass die Belichtungszeit fehlerbehaftet ist oder eine Abbildungsunschärfe durch Übertragung der Schwingungen auf den Sensor entsteht.

Aus der CN 202 748 581 U ist eine Verschlussvorrichtung für ein Kameramodul mit einem Rahmen, zwei Verschlussblättern, Permanentmagneten, Federn, zwei Lineargleitstrukturen, Elektromagneten und einer Lichttransmissionszone bekannt. Die beiden Verschlussblätter weisen jeweils zwei Gleitzylinder auf, über die sie auf den zwei zueinander parallel angeordneten Lineargleitstrukturen, die hier als Führungszylinder ausgebildet sind, zwischen zwei Stellungen geführt werden. Die Gleitzylinder an den Verschlussblättern sind Permanentmagneten. Auf den Führungszylindern ist jeweils mittig ein Elektromagnet angeordnet, der je nach Polung die als Permanentmagneten ausgeführten Gleitzylinder entgegen den Federkräften der um die Führungszylinder angeordneten Druckfedern anzieht oder abstößt. Im stromfreien Zustand sind die Verschlussblätter in einer ersten Stellung, in der die Verschlussblätter die Lichttransmissionszone freigeben, am Rahmen angelegt, der als Anschlag wirkt. In der zweiten Stellung verschließen die Verschlussblätter die Lichttransmissionszone, wobei sie sich geringfügig überlappen. Die Gleitzylinder liegen unter Wirkung der Magnetkraft am Elektromagneten an. Es bestehen hier die gleichen Probleme, nämlich das Auftreten von Schwingungen am Ende der Bewegung des Verschlusselements.

Nachteilig an vielen Kameraverschlussvorrichtungen des Standes der Technik, die mit Magnetkraft ein Verschlussblatt in zwei Stellungen bewegen, ist, dass auf einen Permanentmagneten oder einen ferromagnetischen Körper durch das Magnetfeld eine Kraft einwirkt, die seine Masse beschleunigt und das damit verbundene Verschlussblatt unmittelbar oder mittelbar, oft ungedämpft, in die zwei Stellungen bewegt. Das Verschlussblatt kann aus den Endlagen wieder zurückprallen und den optischen Strahlengang ungewollt kurzzeitig wieder partiell öffnen bzw. schließen.

Aus der DE 26 42 601 C2 ist ein elektromagnetisch betätigter Verschlussmechanismus bekannt, bei dem ein Verschlusselement eine Belichtungsöffnung durch einen Öffnungsimpuls öffnet und durch einen Schließimpuls verschließt. Dabei werden Prallschwingungen an den Umkehrpunkten des Verschlusselements dadurch vermieden, dass der Öffnungsimpuls mit dem Schließimpuls teilweise überlappt ist, wodurch das Verschlusselement seine kinetische Energie vor Erreichen eines Umkehrpunktes größtenteils abgibt.

Aus der vorgenannten DE 30 17 893 A1 ist eine Kameraverschlussvorrichtung mit zwei Verschlussblättern bekannt, die jeweils über ein drehbar gelagertes Verbindungsglied mit einem linear geführten beweglichen Teil eines elektromagnetischen Antriebs verbunden sind. Die Verschlussblätter und die ihnen jeweils zugeordneten beweglichen Teile werden in entgegengesetzter Richtung zueinander symmetrisch zu einer Achse der drehbar gelagerten Verbindungsglieder bewegt. Damit bewirkt bei im Wesentlichen horizontaler Ausrichtung der Achse jeweils die Gewichtskraft der beweglichen Teile an der Achse der Verbindungsglieder ein Drehmoment, das einem Drehmoment entgegenwirkt, welches durch die Gewichtskraft des Verschlussblattes hervorgerufen wird. Die Ablaufbewegung des jeweiligen Verschlussblattes zwischen einer geöffneten Stellung und einer geschlossenen Stellung kann so mit einer erheblich geringeren Kraft ausgeführt werden, da sich die Drehmomente kompensieren. Ein beim Stoppen der Ablaufbewegung in den beiden Stellungen entstehender Aufprall des Verschlussblattes wird minimal gehalten.

Als Führung für die Verschlussblätter ist in allen Ausführungsbeispielen der vorgenannten DE 30 17 893 A1 eine Doppelschwinge vorgesehen, wobei ein Arm der Schwinge mit einem Zapfen versehen ist, der in ein erstes Langloch eingreift, das an einem abtriebsseitigen Ende des drehbar gelagerten Verbindungsgliedes ausgebildet ist. Am anderen, antriebsseitigen Ende des drehbar gelagerten Verbindungsgliedes ist ein zweites Langloch ausgebildet, in den ein am beweglichen Teil des magnetischen Antriebes vorhandener Zapfen eingreift. Der in einer Zylinderspule geführte bewegliche Teil des magnetischen Antriebes und das Verschlussblatt werden zueinander parallel linear geführt.

Ein aus der US 4,171,987 A bekannter elektromagnetisch betriebenen Verschluss weist zwei Verschlussblätter auf. Die Verschlussblätter sind symmetrisch zu beiden Seiten einer Belichtungsöffnung angeordnet und sind gegenläufig entlang einer gemeinsamen linearen Achse beweglich gelagert, wobei die gegenläufige Bewegung über ein Verbindungsglied gekoppelt ist. Die freien Enden der Verschlussblätter sind jeweils als elektromagnetischer Linearantrieb ausgebildet. Jeweils ein Antrieb wird zum Öffnen und ein Antrieb zum Schließen des Verschlusses verwendet, sodass die Bewegung der Verschlussblätter auch abgebremst werden kann. Im stromlosen Zustand ist die Stellung des Verschlusses jedoch undefiniert.

Die GB 2 235 541 A offenbart einen elektromagnetisch betriebenen Kameraverschluss mit zwei Verschlussblättern. Die Verschlussblätter sind jeweils um einen Drehpunkt kippbar gelagert und an einem gemeinsamen Lagerpunkt mit einem gefederten Rückstellhebel verbunden, der wiederum mit einem elektromagnetischen Linearantrieb verbunden ist. Das Öffnen des Verschlusses erfolgt mit dem elektromagnetischen Linearantrieb, entgegen der Federkraft des Rückstellhebels. Der Rückstellhebel weist ein Gegengewicht auf, mit dem die Gewichtskräfte der am Rückstellhebel angreifenden Verschlussmechanik ausgeglichen werden. Dadurch soll beim Betätigen des Verschlusses eine Unabhängigkeit von der Lage der Kamera erreicht werden.

Aus der vorgenannten DE 27 07 175 A1 ist eine Kameraverschlussvorrichtung mit einer optischen Öffnung und einem zu dieser fest angeordneten elektromagnetischen Antrieb bekannt. Ein an einem linear geführten Teil ist ein Verschlussblatt angebracht, das in eine die optische Öffnung freigebende, geöffnete und eine die optische Öffnung abdeckende, geschlossene Stellung bewegbar ist. Es ist ein, um einen Drehpunkt schwenkbarer, zweiseitiger Hebel vorhanden, der mit einem antriebsseitigen Endemit dem linear geführten Teil verbunden ist und an seinen abtriebsseitigen Ende ein Gegengewicht vorhanden ist. Dieses Gegengewicht bewirkt ein Drehmoment auf die Drehachse, das einem durch eine Gewichtskraft bewirktem Drehmoment entgegenwirkt. Nachteilig an den vorgenannten Verschlussvorrichtungen ist insbesondere, dass für die Bewegung der beiden Verschlussblätter jeweils ein eigener elektromotorischer Antrieb erforderlich ist. Auch ist die Verschlussvorrichtung im stromlosen Zustand instabil, das heißt Erschütterungen, insbesondere in Richtung der Stellbewegung wirkende Stöße oder Schwingungen können dazu führen, dass die Verschlussblätter aus ihrer jeweiligen Stellung bewegt werden.

Es ist die Aufgabe der Erfindung, eine Kameraverschlussvorrichtung zu schaffen, die kompakter ausführbar ist.

Diese Aufgabe wird für eine erfindungsgemäße Kameraverschlussvorrichtung mit einer optischen Öffnung und einem zu dieser fest angeordneten elektromagnetischen Antrieb, einem ersten Verschlussblatt und einem zweiseitigen Hebel gelöst.

Der elektromagnetische Antrieb weist ein linear geführtes, bewegliches Teil auf.

Das erste Verschlussblatt ist in eine die optische Öffnung freigebende, geöffnete Stellung und in eine die optische Öffnung abdeckende, geschlossene Stellung bewegbar.

Der zweiseitige Hebel ist durch einen Drehpunkt in ein antriebsseitiges Ende und ein abtriebsseitiges Ende unterteilt und um den Drehpunkt über einen Schwenkwinkelbereich schwenkbar. Der Drehpunkt ist auf einer zu der optischen Öffnung fest angeordneten Drehachse angeordnet und das antriebsseitige Ende steht mit dem beweglichen Teil in Verbindung.

Das erste Verschlussblatt bildet fest mit dem beweglichen Teil verbunden eine Einheit und am abtriebsseitigen Ende des zweiseitigen Hebels ist ein Gegengewicht vorhanden. Auf das Gegengewicht wirkt eine zweite Gewichtskraft, die ein zweites Drehmoment um die Drehachse bewirkt, das einem ersten Drehmoment entgegenwirkt, welches durch eine auf die Einheit wirkende erste Gewichtskraft bewirkt wird.

Dadurch, dass das erste Verschlussblatt fest mit dem beweglichen Teil verbunden ist und mit ihm eine Einheit bildet und am abtriebsseitigen Ende es zweiseitigen Hebels ein Gegengewicht vorhanden ist, wirkt auf das Gegengewicht eine zweite Gewichtskraft, die ein zweites Drehmoment um die Drehachse bewirkt, das einem ersten Drehmoment entgegenwirkt, welches durch eine auf die Einheit wirkende erste Gewichtskraft bewirkt wird.

Es ist erfindungswesentlich, dass entweder die Kameraverschlussvorrichtung einen ersten Permanentmagneten aufweist, der wenigstens eine Magnetfläche aufweist und der innerhalb des Schwenkwinkelbereiches dem Gegengewicht so zugeordnet fest angeordnet ist, dass das Gegengewicht in der geöffneten Stellung und der geschlossenen Stellung durch Magnetkraft des ersten Permanentmagneten gehalten wird oder ein erster und ein zweiter Permanentmagnet, jeweils mindestens eine Magnetfläche aufweisend, vorhanden sind. Diese sind dem Gegengewicht so zugeordnet, dass das Gegengewicht in der geöffneten Stellung und der geschlossenen Stellung durch Magnetkraft des ersten oder des zweiten Permanentmagneten gehalten wird.

Insbesondere besteht das Gegengewicht aus einem ferromagnetischen Material und eine, der wenigstens einen Magnetfläche, ist in der geöffneten Stellung und der geschlossenen Stellung jeweils einem von zwei verschiedenen Flächenabschnitten einer äußeren Umfangsfläche des Gegengewichtes gegenüberstehend angeordnet.

Es ist von Vorteil, wenn das Gegengewicht aus einem ferromagnetischen Material besteht und wenigstens zwei Magnetflächen vorhanden sind, wobei eine der wenigstens zwei Magnetflächen in der geöffneten Stellung einem Flächenabschnitt einer inneren Umfangsfläche des Gegengewichtes und eine andere der wenigstens zwei Magnetflächen in der geschlossenen Stellung einem anderen Flächenabschnitt der inneren Umfangsfläche des Gegengewichtes gegenüberstehend angeordnet ist.

Alternativ ist es vorteilhaft, wenn der erste Permanentmagnet an dem Gegengewicht befestigt ist und innerhalb des Schwenkwinkelbereiches ein ferromagnetischer Anker mit zwei dem Gegengewicht zugewandten Stirnflächen angeordnet ist, wobei eine, der wenigstens einen Magnetfläche, in der geöffneten Stellung einer der zwei Stirnflächen und in der geschlossenen Stellung der anderen der zwei Stirnflächen gegenüberstehend angeordnet ist.

Insbesondere besteht das Gegengewicht aus einem ferromagnetischen Material und der erste und der zweite Permanentmagnet sind außerhalb des Schwenkwinkelbereiches sich gegenüberliegend angeordnet. Eine, der wenigstens einen Magnetfläche, des ersten Permanentmagneten ist einem Flächenabschnitt einer äußeren Umfangsfläche des Gegengewichtes in der geöffneten Stellung und eine der wenigstens einen Magnetfläche des zweiten Permanentmagneten ist in der geschlossenen Stellung einem anderen Flächenabschnitt der äußeren Umfangsfläche des Gegengewichtes gegenüberliegend angeordnet.

Vorteilhaft schließen die betreffende Magnetfläche und der betreffende Flächenabschnitt in der geöffneten Stellung und der geschlossenen Stellung jeweils einen Spalt miteinander ein, der schmaler ist als jeder Abstand des Gegengewichts zum ersten bzw. zum zweiten Permanentmagneten während der Bewegung zwischen der geöffneten und der geschlossenen Stellung.

Das Gegengewicht kann vorteilhaft ein zweites Verschlussblatt enthalten.

Es ist von Vorteil, wenn das zweite Verschlussblatt fest mit einer linear geführten Verbindungsstange verbunden ist, die gemeinsam mit dem zweiten Verschlussblatt das Gegengewicht bildet und am abtriebsseitigen Ende des zweiseitigen Hebels drehbar gelagert ist.

Vorteilhaft ist der elektromagnetische Antrieb ein Hubmagnet, mit einer Spule und einem ferromagnetischen oder permanentmagnetischen Ankerkern, wobei der Ankerkern an einem Stößel angebracht ist, der das bewegliche Teil darstellt.

Das Verhältnis einer Hublänge des elektromagnetischen Antriebs zur Baulänge der Kameraverschlussvorrichtung in Richtung der Hublänge ist vorteilhaft größer als 1:2.

Dazu weist die Spule einen Spulenkörper und vorteilhaft eine wenigstens zweiphasige Wicklung auf, womit die Bewegung des Stößels zeitgleich sowohl durch Anziehungskräfte als auch Abstoßungskräfte verursacht wird, die in Richtung der Hublänge lokal hintereinander wirken.

Es ist besonders günstig, wenn der Spulenkörper eine lineare Gleitführung für den Stößel darstellt.

Es ist auch von Vorteil, wenn eine ferromagnetische Einhausung vorhanden ist, die die Spule umschließt, womit ein im Inneren der Spule entstehender Magnetfluss erhöht und ein um die Spule entstehendes Streufeld reduziert wird.

Der in der vorgenannten DE 30 17 893 A1 beschriebenen Kameraverschlussvorrichtung liegt offensichtlich die Überlegung zugrunde, die auf die Masse des beweglichen Teils einer elektromotorischen Antriebseinheit wirkende Gewichtskraft mit der auf das Verschlussblatt wirkenden Gewichtskraft zumindest teilweise zu kompensieren. Dazu sind das bewegliche Teil und das Verschlussblatt über ein um einen Drehpunkt drehbar gelagertes Verbindungsglied miteinander verbunden. Der Drehpunkt befindet sich zwischen zwei Zapfen, die am Verschlussblatt bzw. am beweglichen Teil vorhanden sind und in jeweils einem am Verbindungsglied ausgebildeten Langloch geführt sind.

Der vorliegenden Erfindung liegt die Erkenntnis zugrunde, dass die Kameraverschlussvorrichtung kompakter und stabiler ausführbar ist, wenn das Verschlussblatt unmittelbar mit dem beweglichen Teil des elektromagnetischen Antriebs fest verbunden wird. Ein entgegenwirkendes Drehmoment wird mit einem Gegengewicht erzeugt, dass auch ein zweites Verschlussblatt enthalten kann, womit mit einem einzigen elektromechanischen Antrieb sowohl ein als auch zwei Verschlussblätter angetrieben werden können.

Nachfolgend wird die Erfindung an Ausführungsbeispielen anhand von Zeichnungen näher erläutert. Hierzu zeigen:
- Fig. 1a und 1b:: ein erstes Ausführungsbeispiel einer Kameraverschlussvorrichtung mit einem Verschlussblatt, wobei das Gegengewicht zwischen einem ersten und einem zweiten Permanentmagneten schwenkbar ist,
- Fig. 2a und 2b:: ein zweites Ausführungsbeispiel, wobei das Gegengewicht gegenüber einem ersten Permanentmagneten schwenkbar ist,
- Fig. 3a und 3b:: ein drittes Ausführungsbeispiel, wobei das Gegengewicht um einen ersten Permanentmagneten schwenkbar ist,
- Fig. 4a und 4b:: ein viertes Ausführungsbeispiel, wobei ein erster Permanentmagnet mit dem Gegengewicht fest verbunden ist und gegenüber einem ferromagnetischen Anker schwenkbar ist,
- Fig. 5a und 5b:: ein fünftes Ausführungsbeispiel mit zwei Verschlussblättern und
- Fig. 6:: eine Detailansicht mit einem Hubmagnet und einem ersten Verschlussblatt in Explosionsdarstellung.

Eine erfindungsgemäße Kameraverschlussvorrichtung enthält in allen Ausführungen eine optische Öffnung 1, einen zu dieser fest angeordneten elektromagnetischen Antrieb 2 mit einem linear geführten, beweglichen Teil und ein erstes Verschlussblatt 3, das mit dem beweglichen Teil fest verbunden eine Einheit 23 bildet.

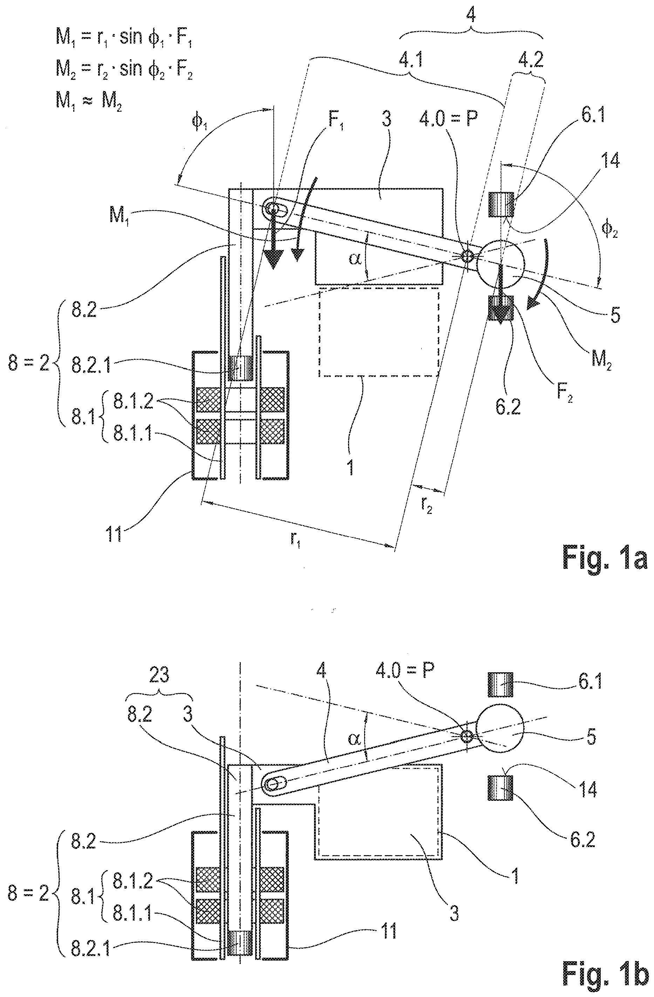

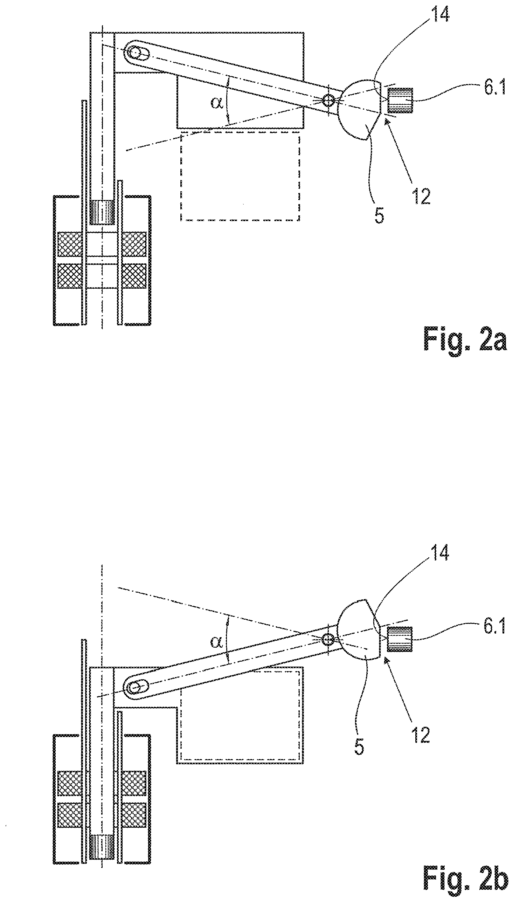

Das Verschlussblatt 3 ist in eine die optische Öffnung 1 freigebende, geöffnete Stellung (siehe **Fig. 1a** und **Fig. 2a****)** und in eine, die optische Öffnung 1 abdeckende, geschlossene Stellung (siehe **Fig. 1b**und **Fig. 2b****)** bewegbar. Darüber hinaus ist ein zweiseitiger Hebel 4 vorhanden, der durch einen Drehpunkt P in ein antriebsseitiges Ende 4.1 und ein abtriebsseitiges Ende 4.2 unterteilt ist und um den Drehpunkt P über einem Schwenkwinkelbereich α schwenkbar ist. Der Drehpunkt P ist auf einer zu der optischen Öffnung 1 fest angeordneten Drehachse 4.0 angeordnet. Das antriebsseitige Ende 4.1 des zweiseitigen Hebels 4 steht mit dem beweglichen Teil über ein Drehgelenk in Verbindung, das durch einen in ein Langloch eingreifenden Zapfen gebildet wird und am abtriebsseitigen Ende 4.2 des zweiseitigen Hebels 4 ist ein Gegengewicht 5 vorhanden.

Auf die Einheit 23 wirkt, im Wesentlichen bestimmt durch die Masse des Stößels 8.2 und des ersten Verschlussblattes 3, eine erste Gewichtskraft F₁, während auf das Gegengewicht 5, bestimmt durch dessen Masse, eine zweite Gewichtskraft F₂ wirkt.

Die erste Gewichtskraft F₁ bewirkt ein erstes Drehmoment M₁ um die Drehachse 4.0, welches einem zweiten Drehmoment M₂ um die Drehachse 4.0 entgegenwirkt, das durch die zweite Gewichtskraft F₂ bewirkt wird. Das erste und das zweite Drehmoment M₁, M₂ sind in der geöffneten und in der geschlossenen Stellung und über den Bewegungsablauf dazwischen nicht zwingend konstant und gleich groß, wirken jedoch immer in entgegengesetzter Drehrichtung und kompensieren sich weitgehend.

Bei der optischen Öffnung 1 kann es sich um einen nicht körperlich begrenzten Bereich handeln, durch den eine Strahlung auf einen Detektor trifft. Es kann sich hierbei auch um die Öffnung einer Blende oder die Empfangsfläche eines Detektors handeln. Sie kann eine beliebige Form, z.B. eine runde oder bevorzugt eine rechteckige Form aufweisen, wie in den nachfolgenden Ausführungsbeispielen gezeigt ist. Lediglich die Form des ersten Verschlussblattes 3 bzw. auch eines zweiten Verschlussblattes 7, wie es ein zweites Ausführungsbeispiel aufweist, muss darauf angepasst werden.

Eine Ausführung der Kameraverschlussvorrichtung mit einem nur einteiligen Verschluss, der also nur das erste Verschlussblatt 3 aufweist, ist vorteilhaft für die Verwendung der Kameraverschlussvorrichtung für einen Offset-Abgleich in einer (insbesondere thermischen) IR-Kamera (NUC, Non - Uniformity - Correction), bei dem es darauf ankommt, dass der Verschluss, welcher die optische Öffnung 1 kurzzeitig für wenigstens einen Bildaufnahmezyklus verschließt, auf seiner Oberfläche eine möglichst exakt einheitliche Temperatur aufweist. Bei einem zweiteiligen Verschluss, der also das erste und das zweite Verschlussblatt 3, 7 aufweist, die zwangsläufig innerhalb der Vorrichtung eine unterschiedliche Relativlage zu vorhandenen Wärmequellen oder Wärmesenken haben, kann eine dadurch entstehende Temperaturdifferenz zwischen dem ersten und dem zweiten Verschlussblatt 3, 7 bereits dazu führen, dass der Verschluss für einen Offset-Abgleich nicht gut geeignet ist.

Trotzdem kann eine Ausführung mit einem ersten und einem zweiten Verschlussblatt 3, 7 für andere Anwendungen auch vorteilhaft sein.

Sowohl für eine Ausführung der Kameraverschlussvorrichtung mit nur dem ersten Verschlussblatt 3 als auch mit dem ersten Verschlussblatt 3 und dem zweiten Verschlussblatt 7, als Bestandteil des Gegengewichtes 5, ist es von Vorteil, wenn dem Gegengewicht 5 ein erster Permanentmagnet 6.1 oder ein erster und ein zweiter Permanentmagnet 6.1, 6.2 zugeordnet sind, um das Gegengewicht 5 in der geöffneten Stellung und in der geschlossenen Stellung bei stromlosem Zustand des elektromagnetischen Antriebs 2 durch Magnetkraft zu halten.

Der erste und der zweite Permanentmagnet 6.1, 6.2 weisen jeweils wenigstens eine Magnetfläche 14 auf. Als Magnetfläche 14 im Sinne dieser Beschreibung wird eine Fläche verstanden, die wenigstens einen Magnetpol aufweist.

Es werden in den nachfolgenden fünf Ausführungsbeispielen an Hand von Zeichnungen vier Ausführungen beschrieben, die jeweils nur das erste Verschlussblatt 3 aufweisen, sowie eine Ausführung, die auch ein zweites Verschlussblatt 7 aufweist.

Gemäß einem ersten Ausführungsbeispiel, dargestellt in **Fig. 1a** in einer geöffneten Stellung und dargestellt in **Fig. 1b** in einer geschlossenen Stellung, weist die Kameraverschlussvorrichtung nur das erste Verschlussblatt 3 auf.

Das Gegengewicht 5 besteht aus einem ferromagnetischen Material und es sind ein erster und ein zweiter Permanentmagnet 6.1, 6.2 vorhanden, die das Gegengewicht 5 in der geöffneten Stellung und alternativ in der geschlossenen Stellung halten, wenn der elektromagnetische Antrieb 2 stromlos ist. Der erste und der zweite Permanentmagnet 6.1, 6.2 sind dabei vorteilhaft zwei gleiche Stabmagneten mit einer gleichen Haltekraft und einer Symmetrieachse, die zueinander auf einer Geraden fluchtend angeordnet sind. Das Gegengewicht 5 weist die Form einer runden Scheibe auf, deren Mittelpunkt in der geöffneten und der geschlossenen Stellung auf der Geraden liegt. Die dem Gegengewicht 5 zugewandten Magnetflächen 14, hier z.B. den Nord- oder Südpol des ersten bzw. zweiten Permanentmagnetes 6.1, 6.2 enthaltend, sind typischerweise Planflächen oder vorteilhaft Zylinderabschnittsflächen mit einem geringfügig größeren Radius, als ihn das Gegengewicht 5 aufweist.

Vorteilhaft wirken der erste und der zweite Permanentmagnet 6.1, 6.2 selbst nicht als Anschläge und es verbleibt zwischen dem Gegengewicht 5 und dem ersten bzw. dem zweiten Permanentmagnet 6.1, 6.2 in der geöffneten und der geschlossenen Stellung ein Spalt 12. Der Spalt 12 ist vorteilhaft um die Haltekraft zu begrenzen und verhindert insbesondere den Verschleiß der Magnetfläche 14. Der Spalt 12 ist schmaler als jeder Abstand des Gegengewichts 5 zum ersten bzw. zum zweiten Permanentmagneten 6.1, 6.2 während der Bewegung zwischen der geöffneten und der geschlossenen Stellung.

Diese Aussage trifft vorteilhaft auch auf die nachfolgend beschriebenen weiteren Ausführungsbeispiele zu.

Der Schwenkwinkelbereich α ist vorteilhaft durch die Hublänge oder durch mechanische Anschläge begrenzt, an die z.B. der bewegliche Teil oder der zweiseitige Hebel 4 anschlägt. Der elektromagnetische Antrieb 2 ist hier durch einen Hubmagneten 8 realisiert, mit einer Spule 8.1 und einem ferromagnetischen oder permanentmagnetischen Ankerkern 8.2.1, der an einem Stößel 8.2 angebracht ist, der hier das bewegliche Teil des elektromagnetischen Antriebs 2 darstellt.

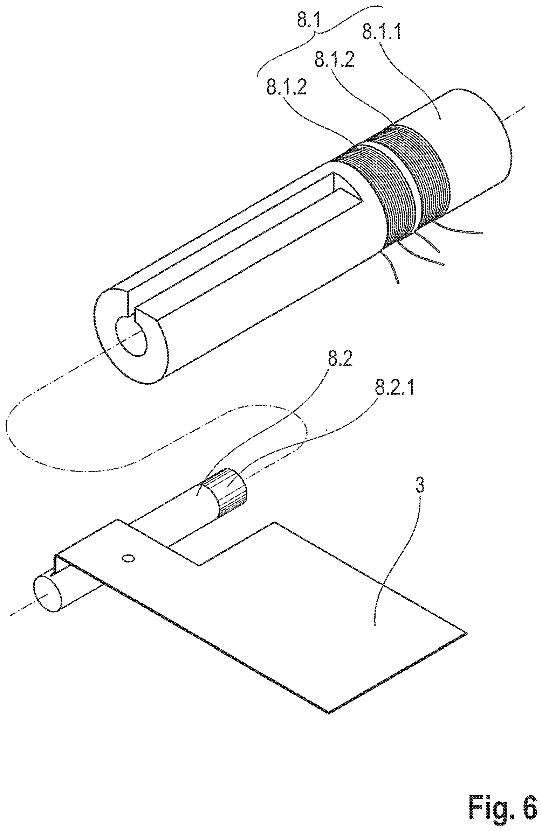

Die Spule 8.1 weist einen Spulenkörper 8.1.1 auf, der nicht nur als Träger für die Wicklung 8.1.2, sondern vorteilhaft auch als Gleitführung 10 für den Stößel 8.2 dient, wie in Fig. 6 dargestellt. Dazu ist er über eine für die Aufnahme der Wicklung 8.1.2 vorgesehene Länge hinaus verlängert und entlang der Verlängerung geschlitzt. Der mit dem ersten Verschlussblatt 3 fest verbundene Stößel 8.2 kann so innerhalb des Spulenkörpers 8.1.1 gleiten. Es bedarf keines zusätzlichen Bauteils zur Führung des Stößels 8.2.

Das mit dem Stößel 8.2 fest verbundene erste Verschlussblatt 3 wird zwischen der geöffneten und der geschlossenen Stellung linear, in einer durch die Bewegungsrichtung des Ankerkerns 8.2.1 vorgegebenen Richtung geführt, während der zweiseitige Hebel 4 um einen festen Drehpunkt P über einen Schwenkwinkelbereich α geschwenkt wird. Die Bewegung des Ankerkerns 8.2.1 erfolgt über eine Hublänge, die vorteilhaft größer der Hälfte einer Baulänge der Kameraverschlussvorrichtung ist. Die Baulänge ist die maximalen Ausdehnung der Kameraverschlussvorrichtung in Bewegungsrichtung des Ankerkerns 8.2.1. Die Verbindung mit dem zweiseitigen Hebel 4 und der Einheit 23 ist über eine Stift-Langloch-Verbindung hergestellt. Damit verändert sich während des Bewegungsablaufs der Abstand des Angriffspunktes der ersten Gewichtskraft F₁ vom Drehpunkt P und folglich die Länge eines ersten Hebelarmes r₁, womit sich auch das erste Drehmoment M₁ ändert. Die Länge eines zweiten Hebelarmes r₂ bleibt konstant. Darüber hinaus ändern sich beide Drehmomente M₁, M₂ durch die Änderungen der Winkel φ₁, φ₂. Das erste und das zweite Drehmoment M₁, M₂ müssen sich nicht gleichermaßen ändern.

Durch die unmittelbare Verbindung des beweglichen Teils, das in diesem ersten Ausführungsbeispiel der Stößel 8.2 ist, mit dem ersten Verschlussblatt 3 wird die Bewegung des Ankerkerns 8.2.1 im Übersetzungsverhältnis 1:1 übertragen. Um eine im Vergleich zum Bewegungsbereich des Stößels 8.2 kurze Länge am Spulenkörper 8.1.1 für die Aufnahme der Wicklung 8.1.2 dimensionieren zu können, ist die Wicklung 8.1.2 als eine wenigstens zweiphasige Wicklung ausgeführt. Sie kann aus wenigstens zwei hintereinander auf dem Spulenkörper 8.1.1 angeordneten bipolaren Einzelwicklungen bestehen oder aus unipolaren Wicklungspaaren, deren beide Hälften gegensinnig gewickelt sind. Ein zeitlich und damit phasenversetztes Ansteuern führt zu einer vergleichsweise größeren Hublänge, als er mit einer Spule mit nur einer Einzelwicklung gleicher Wicklungslänge erreichbar wäre. Eine größere Hublänge ergibt sich auch bei Verwendung eines permanentmagnetischen Ankerkerns 8.2.1 und der abwechselnden Nutzung von Anziehungs- und Abstoßungskräften, indem die Richtung des Magnetfelds der Spule 8.1 umgekehrt wird. Bei bipolaren Einzelwicklungen wird dazu der Stromfluss umgepolt, bei unipolaren Wicklungspaaren wird abwechselnd die eine oder die andere Wicklungshälfte bestromt.

Vorteilhaft ist die Spule 8.1 teilweise oder vollständig von einer ferromagnetischen Einhausung 11 umschlossen, womit ein im Inneren der Spule 8.1 entstehender Magnetfluss erhöht und ein entstehendes Streufeld um die Spule 8.1 reduziert wird.

Das zweite Ausführungsbeispiel, dargestellt in **Fig. 2a** in einer geöffneten Stellung und dargestellt in **Fig. 2b** in einer geschlossenen Stellung, unterscheidet sich von dem ersten Ausführungsbeispiel oder Ausführungen der erwähnten Modifikationen dadurch, dass nur ein erster Permanentmagnet 6.1 vorhanden ist, durch seine Anordnung bezogen auf das Gegengewicht 5 und die geometrische Form des Gegengewichtes 5. Die Form des Gegengewichtes 5 stellt hier ein Segment einer runden Scheibe dar, das auf seiner äußeren Umfangsfläche zwei Planflächenabschnitte aufweist, die einen Winkel kleiner 180° miteinander einschließen, wobei jeweils einer der Planflächenabschnitte einer gleichen Magnetfläche 14 des ersten Permanentmagneten 6.1 in der geöffneten oder der geschlossenen Stellung parallel gegenüberliegt. Dazu ist der erste Permanentmagnet 6.1 innerhalb des Schwenkwinkelbereiches α angeordnet. Die Magnetfläche 14 ist hier eine Planfläche.

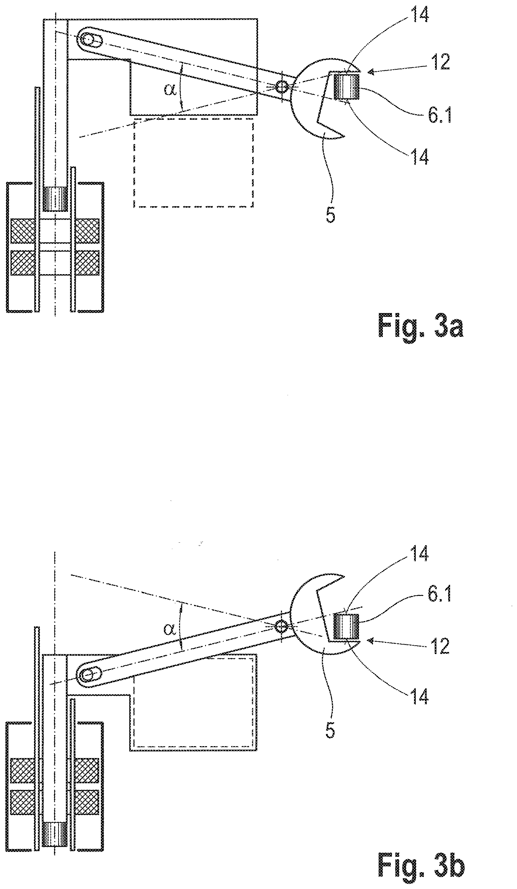

Das dritte Ausführungsbeispiel, gezeigt in Fig. 3a in einer geöffneten Stellung und in Fig. 3b in einer geschlossenen Stellung, unterscheidet sich vom zweiten Ausführungsbeispiel durch die Form des Gegengewichtes 5. Dieses weist hier die Form eines Maulschlüssels auf, mit einer inneren Umfangsfläche, die zwei Planflächenbereiche zeigt. Diese liegen in der geöffneten oder der geschlossenen Stellung, mit einem gleichen Spalt 12 gleicher Dicke und gleicher Breite, jeweils einer der planen Magnetflächen 14 gegenüber. Der erste Permanentmagnet 6.1 ist innerhalb des Schwenkwinkelbereiches α und innerhalb des Gegengewichtes 5 angeordnet.

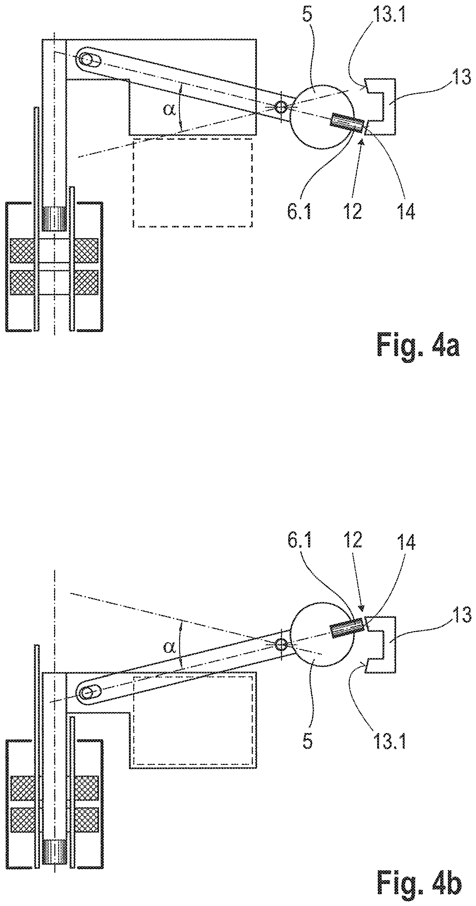

Gemäß dem vierten Ausführungsbeispiel, gezeigt in Fig. 4a in einer geöffneten Stellung und in Fig. 4b in einer geschlossenen Stellung, ist der erste Permanentmagnet 6.1 am Gegengewicht 5 innerhalb des Schwenkwinkelbereiches α fest angebracht und radial zum Drehpunkt P ausgerichtet, weshalb das Gegengewicht 5 selbst in diesem Fall nicht aus einem ferromagnetischen Material bestehen muss. Innerhalb des Schwenkwinkelbereiches α ist auch ein ferromagnetischer Anker 13, mit zwei planen, dem Drehpunkt P zugewandten Stirnflächen 13.1, statisch fest angeordnet. In der geöffneten Stellung und der geschlossenen Stellung steht jeweils eine der Stirnflächen 13.1 einer gleichen der Magnetflächen 14 gegenüber und bildet einen gleichen Spalt 12.

Die Magnetflächen 14, die Stirnflächen 13.1 oder die Flächenabschnitte an einer inneren oder äußeren Umfangsfläche des Gegengewichtes 5 wurden in den Ausführungsbeispielen als Planflächen beschrieben, sie können auch andere Flächenformen einnehmen, wie z.B. Zylinder-, Kegel- oder Kugelflächenabschnitte. Es ist dem Fachmann bekannt, dass durch die Gestaltung der Magnetflächen 14 der konkrete Verlauf der Magnetkraft während der Bewegung über den Schwenkwinkelbereich α gezielt beeinflusst werden kann.

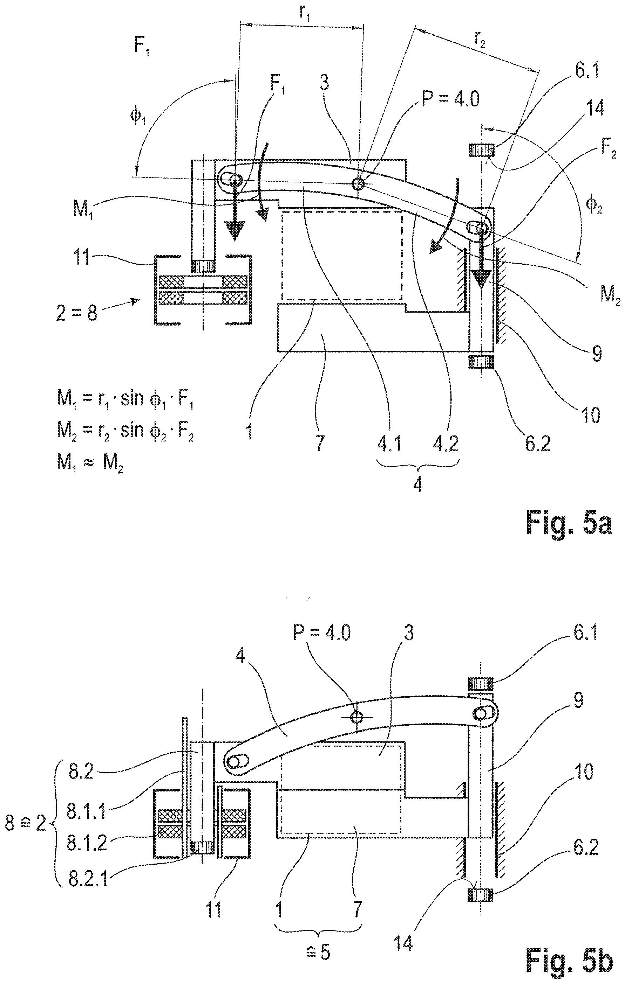

Gemäß einem fünften Ausführungsbeispiel, dargestellt in den **Fig. 5a** und **Fig. 5b** enthält das Gegengewicht 5 ein zweites Verschlussblatt 7. Dieses Ausführungsbeispiel unterscheidet sich von dem ersten Ausführungsbeispiel nur in der Ausführung des Gegengewichtes 5.

Das Gegengewicht 5, welches im ersten Ausführungsbeispiel mit dem abtriebsseitigen Ende 4.2 des zweiseitigen Hebels 4 fest verbunden ist und damit auf einer Kreisbahn bewegt wird, bewegt sich hier wie die Einheit 23 geradlinig und orthogonal zur Drehachse 4.0. Dazu ist es vergleichbar mit der Einheit 23, die über eine Stift-Langloch-Verbindung mit dem antriebsseitigen Ende 4.1 des zweiseitigen Hebels 4 in Verbindung steht, mit dem abtriebsseitigen Ende 4.2 des zweiseitigen Hebels 4 über einer Stift-Langloch-Verbindung drehbar gelagert verbunden, womit sich auch hier die Länge des zweiten Hebelarmes r₂ während des Bewegungsablaufes verändert. Vorteilhaft ist das zweite Verschlussblatt 7, vergleichbar mit der Verbindung des ersten Verschlussblattes 3 mit dem Stößel 8.2, an einer Verbindungstange 9 befestigt. Die Verbindungsstange 9 ist aus einem ferromagnetischem Material und kann so durch den ersten oder den zweiten Permanentmagneten 6.1, 6.2 gehalten werden. Wie bei dem Stößel 8.2 ist an der Verbindungsstange 9 ein Zapfen vorhanden, der in einem am zweiseitigen Hebel 4 ausgebildeten Langloch geführt ist.

Zur linearen Führung der Verbindungsstange 9 ist eine Gleitführung 10 vorhanden. Das erste und das zweite Verschlussblatt 3, 7 werden mit nur einem elektromagnetischen Antrieb 2 zeitgleich gegensinnig bewegt.

Insbesondere eine vorteilhafte Ausführung der Kameraverschlussvorrichtung mit nur einem ersten Verschlussblatt 3 ist im Vergleich zum Stand der Technik deutlich kompakter. Indem vorteilhaft in der die optische Öffnung 1 abdeckenden Stellung bzw. in der die optische Öffnung 1 freigebenden Stellung eine Haltekraft in der Bewegungsrichtung des ersten Verschlussblattes 3 durch den ersten und den zweiten Permanentmagneten 6.1, 6.2 ausgeübt wird, wird gewährleistet, dass das erste Verschlussblatt 3 in einer stabilen Stellung gehalten wird, und zwar auch dann, wenn Stöße oder Schwingungen in Richtung der Bewegungsrichtung auf die Kameraverschlussvorrichtung wirken.

### Bezugszeichenliste

- 1: optische Öffnung
- 2: elektromagnetischer Antrieb
- 3: erstes Verschlussblatt
23 Einheit
- 4: zweiseitiger Hebel
4.0 Drehachse
4.1 antriebsseitiges Ende
4.2 abtriebsseitiges Ende
- 5: Gegengewicht
6.1 erster Permanentmagnet
6.2 zweiter Permanentmagnet
- 7: zweites Verschlussblatt
- 8: Hubmagnet
8.1 Spule
8.1.1 Spulenkörper
8.1.2 Wicklung
8.2 Stößel
8.2.1 Ankerkern
- 9: Verbindungsstange
- 10: Gleitführung
- 11: Einhausung
- 12: Spalt
- 13: Anker
- 13.1: Stirnfläche des Ankers
- 14: Magnetfläche
- P: Drehpunkt
- α: Schwenkwinkelbereich
- M₁: erstes Drehmoment
- M₂: zweites Drehmoment
- F₁: erste Gewichtskraft
- F₂: zweite Gewichtskraft
- φ₁: erster Winkel
- φ₂: zweiter Winkel
- r₁: erster Hebelarm
- r₂: zweiter Hebelarm

## Patentansprüche

1. Kameraverschlussvorrichtung mit einer optischen Öffnung (1), einem zu dieser fest angeordneten elektromagnetischen Antrieb (2), der ein linear geführtes, bewegliches Teil aufweist, einem ersten Verschlussblatt (3), das in eine die optische Öffnung (1) freigebende, geöffnete Stellung und in eine die optische Öffnung (1) abdeckende, geschlossene Stellung bewegbar ist, und einem zweiseitigen Hebel (4), der durch einen Drehpunkt (P) in ein antriebsseitiges Ende (4.1) und ein abtriebsseitiges Ende (4.2) unterteilt ist und um den Drehpunkt (P) über einen Schwenkwinkelbereich (α) schwenkbar ist, wobei der Drehpunkt (P) auf einer zu der optischen Öffnung (1) fest angeordneten Drehachse (4.0) angeordnet ist und das antriebsseitige Ende (4.1) mit dem beweglichen Teil in Verbindung steht, wobei das erste Verschlussblatt (3) mit dem beweglichen Teil fest verbunden eine Einheit (23) bildet und dass am abtriebsseitigen Ende (4.2) des zweiseitigen Hebels (4) ein Gegengewicht (5) vorhanden ist, wobei eine auf das Gegengewicht (5) wirkende zweite Gewichtskraft (F₂) ein zweites Drehmoment (M₂) um die Drehachse (4.0) bewirkt, das einem ersten Drehmoment (M₁) entgegenwirkt, welches durch eine auf die Einheit (23) wirkende erste Gewichtskraft (F₁) bewirkt wird, **dadurch gekennzeichnet, .**
**dass** ein erster Permanentmagnet (6.1), wenigstens eine Magnetfläche (14) aufweisend, innerhalb des Schwenkwinkelbereiches (α) dem Gegengewicht (5) so zugeordnet fest angeordnet ist, dass das Gegengewicht (5) in der geöffneten Stellung und der geschlossenen Stellung durch Magnetkraft des ersten Permanentmagneten (6.1) gehalten wird oder
**dass** ein erster und ein zweiter Permanentmagnet (6.1, 6.2), jeweils mindestens eine Magnetfläche (14) aufweisend, vorhanden sind, die dem Gegengewicht (5) so zugeordnet angeordnet sind, dass das Gegengewicht (5) in der geöffneten Stellung durch Magnetkraft des ersten Permanentmagneten (6.1) und der geschlossenen Stellung durch die Magnetkraft des zweiten Permanentmagneten (6.2) gehalten wird.

2. Kameraverschlussvorrichtung nach Anspruch 1, **dadurch gekennzeichnet, dass** für den Fall, dass nur der erster Permanentmagnet (6.1) vorhanden ist, das Gegengewicht (5) aus einem ferromagnetischen Material besteht und eine der wenigstens einen Magnetfläche (14) in der geöffneten Stellung und der geschlossenen Stellung jeweils einem von zwei verschiedenen Flächenabschnitten einer äußeren Umfangsfläche des Gegengewichtes (5) gegenüberstehend angeordnet ist.

3. Kameraverschlussvorrichtung nach Anspruch 1, **dadurch gekennzeichnet, dass** für den Fall, dass nur der erster Permanentmagnet (6.1) vorhanden ist, das Gegengewicht (5) aus einem ferromagnetischen Material besteht und wenigstens zwei Magnetflächen (14) vorhanden sind, wobei eine der wenigstens zwei Magnetflächen (14) in der geöffneten Stellung einem Flächenabschnitt einer inneren Umfangsfläche des Gegengewichtes (5) und eine andere der wenigstens zwei Magnetflächen (14) in der geschlossenen Stellung einem anderen Flächenabschnitt der inneren Umfangsfläche des Gegengewichtes (5) gegenüberstehend angeordnet ist.

4. Kameraverschlussvorrichtung nach Anspruch 1, **dadurch gekennzeichnet, dass** für den Fall, dass nur der erster Permanentmagnet (6.1) vorhanden ist, der erste Permanentmagnet (6.1) an dem Gegengewicht (5) befestigt ist und innerhalb des Schwenkwinkelbereiches (α) ein ferromagnetischer Anker (13) mit zwei dem Gegengewicht (5) zugewandten Stirnflächen (13.1) angeordnet ist, wobei eine der wenigstens einen Magnetfläche (14) in der geöffneten Stellung einer der zwei Stirnflächen (13.1) und in der geschlossenen Stellung der anderen der zwei Stirnflächen (13.1) gegenüberstehend angeordnet ist.

5. Kameraverschlussvorrichtung nach Anspruch 1, **dadurch gekennzeichnet, dass** für den Fall, dass der erste und der zweite Permanentmagnet (6.1,6.2) vorhanden sind, das Gegengewicht (5) aus einem ferromagnetischen Material besteht und der erste und der zweite Permanentmagnet (6.1, 6.2) außerhalb des Schwenkwinkelbereiches (α) sich gegenüberliegend angeordnet sind und eine der wenigstens einen Magnetfläche (14) des ersten Permanentmagneten (6.1) einem Flächenabschnitt einer äußeren Umfangsfläche des Gegengewichtes (5) in der geöffneten Stellung und eine der wenigstens einen Magnetfläche (14) des zweiten Permanentmagneten (6.2) in der geschlossenen Stellung einem anderen Flächenabschnitt der äußeren Umfangsfläche des Gegengewichtes (5) gegenüberliegend angeordnet ist.

6. Kameraverschlussvorrichtung nach einem der Ansprüche 2, 3, 4 oder 5, **dadurch gekennzeichnet,**
**dass** die jeweils betreffende Magnetfläche (14) und der betreffende Flächenabschnitt der äußeren Umfangsfläche des Gegengewichtes (5) oder die betreffende Stirnfläche (13.1) in der geöffneten Stellung und der geschlossenen Stellung jeweils einen Spalt (12) miteinander einschließen, der schmaler ist als jeder Abstand des Gegengewichts (5) zum ersten oder zum zweiten Permanentmagneten (6.1, 6.2) während der Bewegung zwischen der geöffneten und der geschlossenen Stellung.

7. Kameraverschlussvorrichtung nach einem der vorherigen Ansprüche, **dadurch gekennzeichnet,**
**dass** das Gegengewicht (5) ein zweites Verschlussblatt (7) enthält.

8. Kameraverschlussvorrichtung nach Anspruch 5 und 7 **dadurch gekennzeichnet, dass** das zweite Verschlussblatt (7) fest mit einer linear geführten Verbindungsstange (9) verbunden ist, die gemeinsam mit dem zweiten Verschlussblatt (7) das Gegengewicht (5) bildet und am abtriebsseitigen Ende (4.2) des zweiseitigen Hebels (4) drehbar gelagert ist.

9. Kameraverschlussvorrichtung nach Anspruch 1, **dadurch gekennzeichnet, dass** der elektromagnetische Antrieb (2) ein Hubmagnet (8) ist, mit einer Spule (8.1) und einem ferromagnetischen oder permanentmagnetischen Ankerkern (8.2.1), der an einem Stößel (8.2) angebracht ist, wobei der Stößel (8.2) das bewegliche Teil darstellt.

10. Kameraverschlussvorrichtung nach Anspruch 1, **dadurch gekennzeichnet, dass** Verhältnis einer Hublänge des elektromagnetischen Antriebs (2) zu einer Baulänge der Kameraverschlussvorrichtung in Richtung der Hublänge vorteilhaft größer als 1:2 ist.

11. Kameraverschlussvorrichtung nach Anspruch 10, **dadurch gekennzeichnet, dass** die Spule (8.1) einen Spulenkörper (8.1.1) und eine wenigstens zweiphasige Wicklung (8.1.2) aufweist.

12. Kameraverschlussvorrichtung nach Anspruch 11, **dadurch gekennzeichnet, dass** der Spulenkörper (8.1.1) eine lineare Gleitführung (10) für den Stößel (8.2) darstellt.

13. Kameraverschlussvorrichtung nach Anspruch 9, **dadurch gekennzeichnet, dass** eine ferromagnetische Einhausung (11) vorhanden ist, die die Spule (8.1) umschließt, womit ein im Inneren der Spule (8.1) entstehender Magnetfluss erhöht und ein um die Spule (8.1) entstehendes Streufeld reduziert wird.

## Claims

1. A camera shutter device comprising an optical opening (1), an electromagnetic drive (2) fixedly arranged relative to the optical opening (1) and having a linearly guided movable part, a first shutter blade (3) movable to an open position exposing the optical opening (1) and to a closed position covering the optical opening (1), and a two-armed lever (4) divided by a pivot point (P) into an input end (4.1) and an output end (4.2) and pivotable about the pivot point (P) over a pivot angle range (α), wherein the pivot point (P) is arranged on an axis of rotation (4.0) fixedly arranged relative to the optical opening (1) and the input end (4.1) is connected to the movable part, the first shutter blade (3) forming a unit (23) fixedly connected to the movable part, and a counterweight (5) is present at the output end (4.2) of the two-armed lever (4), wherein a second weight force (F₂) acting on the counterweight (5) causes a second torque (M₂) about the axis of rotation (4.0) which counteracts a first torque (M₁) caused by a first weight force (F₁) acting on the unit (23), **characterized in that**
a first permanent magnet (6.1), having at least one magnetic face (14), is fixedly arranged within the pivot angle range (α) in association with the counterweight (5) in such a way that the counterweight (5) is held in the open position and the closed position by the magnetic force of the first permanent magnet (6.1), or a first and a second permanent magnet (6.1, 6.2), each having at least one magnetic face (14), are provided, which are arranged in association with the counterweight (5) in such a way that the counterweight (5) is held in the open position by the magnetic force of the first permanent magnet (6.1) and in the closed position by the magnetic force of the second permanent magnet (6.2).

2. The camera shutter device according to claim 1, **characterized in that**, in case only the first permanent magnet (6.1) is present, said counterweight (5) is made of a ferromagnetic material and one of said at least one magnetic faces (14) is arranged opposite one of two different surface portions of an outer circumferential surface of said counterweight (5) in the open position and the closed position, respectively.

3. The camera shutter device according to claim 1, **characterized in that**, in case only the first permanent magnet (6.1) is present, said counterweight (5) is made of a ferromagnetic material and at least two magnetic faces (14) are present, one of said at least two magnetic faces (14) being arranged opposite a surface portion of an inner circumferential surface of said counterweight (5) in the open position and another of said at least two magnetic faces (14) being arranged opposite another surface portion of said inner circumferential surface of said counterweight (5) in the closed position.

4. The camera shutter device according to claim 1, **characterized in that**, in case only the first permanent magnet (6.1) is present, the first permanent magnet (6.1) is attached to the counterweight (5) and a ferromagnetic armature (13) with two end faces (13.1) facing the counterweight (5) is arranged within the pivot angle range (α), one of the at least one magnetic faces (14) being arranged opposite one of the two end faces (13.1) in the open position and opposite the other of the two end faces (13.1) in the closed position.

5. The camera shutter device according to claim 1, **characterized in that**, in case the first and second permanent magnets (6.1,6.2) are present, said counterweight (5) is made of a ferromagnetic material and said first and second permanent magnets (6.1,6.2) are arranged opposite each other outside the pivot angle range (α) and one of the at least one magnetic faces (14) of said first permanent magnet (6.1) is arranged opposite a surface portion of an outer circumferential surface of the counterweight (5) in the open position, and one of the at least one magnetic faces (14) of the second permanent magnet (6.2) is arranged opposite another surface portion of the outer circumferential surface of the counterweight (5) in the closed position.

6. The camera shutter device according to any one of claims 2, 3, 4 or 5, **characterized in that**
the respective magnetic face (14) and the respective surface portion of the outer circumferential surface of the counterweight (5) or the respective end face (13.1) in the open position and the closed position each enclose a gap (12) with each other which is narrower than any distance of the counterweight (5) from the first or second permanent magnet (6.1, 6.2) during the movement between the open and the closed position.

7. The camera shutter device according to any one of the preceding claims, **characterized in that**
the counterweight (5) contains a second shutter blade (7).

8. The camera shutter device according to claim 5 and 7, **characterized in that** the second shutter blade (7) is fixedly connected to a linearly guided connecting rod (9) which, together with the second shutter blade (7), forms the counterweight (5) and is rotatably mounted on the output end (4.2) of the two-armed lever (4).

9. The camera shutter device according to claim 1, **characterized in that** the electromagnetic drive (2) is a solenoid (8), with a coil (8.1) and a ferromagnetic or permanent magnetic armature core (8.2.1), which is attached to a plunger (8.2), the plunger (8.2) being the moving part.

10. The camera shutter device according to claim 1, **characterized in that** the ratio of a stroke length of the electromagnetic drive (2) to an overall length of the camera shutter device in the direction of the stroke length is advantageously greater than 1:2.

11. The camera shutter device according to claim 10, **characterized in that** the coil (8.1) comprises a bobbin (8.1.1) and an at least two-phase winding (8.1.2).

12. The camera shutter device according to claim 11, **characterized in that** the bobbin (8.1.1) is a linear sliding guide (10) for the plunger (8.2).

13. The camera shutter device according to claim 9, **characterized in that** a ferromagnetic enclosure (11) is provided which encloses the coil (8.1), whereby a magnetic flux arising inside the coil (8.1) is increased and a stray field arising around the coil (8.1) is reduced.

## Revendications

1. Dispositif d'obturateur de caméra avec une ouverture optique (1), un actionneur électromagnétique (2) disposé de manière fixe par rapport à celle-ci et présentant une partie mobile guidée linéairement, une première lame d'obturation (3) qui peut être déplacée dans une position ouverte libérant l'ouverture optique (1) et dans une position fermée recouvrant l'ouverture optique (1), et un levier à deux bras (4) qui est divisé par un point de rotation (P) en une extrémité côté entraînement (4.1) et une extrémité côté sortie (4.2) et peut pivoter autour du point de rotation (P) sur une plage d'angles de pivotement (α), le point de rotation (P) étant situé sur un axe de rotation (4.0) qui est disposé de manière fixe par rapport à l'ouverture optique (1) et l'extrémité côté entraînement (4.1) étant en liaison avec la partie mobile, la première lame d'obturation (3) formant une unité (23) solidaire de la partie mobile et un contrepoids (5) étant présent à l'extrémité côté sortie (4.2) du levier à deux bras (4), une deuxième force de poids (F₂) agissant sur le contrepoids (5) provoquant un deuxième couple de rotation (M₂) autour de l'axe de rotation (4.0) qui s'oppose à un premier couple de rotation (M₁) qui est provoqué par une première force de poids (F₁) agissant sur l'unité (23), **caractérisé**
**en ce qu'**un premier aimant permanent (6.1), présentant au moins une surface magnétique (14), est disposé fixement à l'intérieur de la plage d'angles de pivotement (α) en association avec le contrepoids (5) de telle sorte que le contrepoids (5) est maintenu dans la position ouverte et dans la position fermée par la force magnétique du premier aimant permanent (6.1), ou
**en ce qu'**il est prévu un premier et un deuxième aimants permanents (6.1, 6.2), présentant chacun au moins une surface magnétique (14), qui sont disposés en association avec le contrepoids (5) de telle sorte que le contrepoids (5) est maintenu dans la position ouverte par la force magnétique du premier aimant permanent (6.1) et dans la position fermée par la force magnétique du deuxième aimant permanent (6.2).

2. Dispositif d'obturateur de caméra selon la revendication 1, **caractérisé en ce que**, dans le cas où seul le premier aimant permanent (6.1) est présent, le contrepoids (5) est constitué d'un matériau ferromagnétique et l'une de ladite au moins une surface magnétique (14) est disposée en face de l'une de deux parties de surface différentes d'une surface périphérique extérieure du contrepoids (5), respectivement dans la position ouverte et dans la position fermée.

3. Dispositif d'obturateur de caméra selon la revendication 1, **caractérisé en ce que**, dans le cas où seul le premier aimant permanent (6.1) est présent, le contrepoids (5) est constitué d'un matériau ferromagnétique et au moins deux surfaces magnétiques (14) sont présentes, l'une des au moins deux surfaces magnétiques (14) étant disposée en face d'une partie de surface d'une surface périphérique intérieure du contrepoids (5) dans la position ouverte et une autre des au moins deux surfaces magnétiques (14) étant disposée en face d'une autre partie de surface de la surface périphérique intérieure du contrepoids (5) dans la position fermée.

4. Dispositif d'obturateur de caméra selon la revendication 1, **caractérisé en ce que**, dans le cas où seul le premier aimant permanent (6.1) est présent, le premier aimant permanent (6.1) est fixé au contrepoids (5) et, dans la plage d'angles de pivotement (α), un induit ferromagnétique (13) avec deux faces d'extrémité (13.1) est disposé, l'une des au moins une surface magnétique (14) étant disposée en face de l'une des deux surfaces frontales (13.1) dans la position ouverte et en face de l'autre des deux surfaces frontales (13.1) dans la position fermée.

5. Dispositif d'obturateur de caméra selon la revendication 1, **caractérisé en ce que**, dans le cas où le premier et le deuxième aimants permanents (6.1, 6.2) sont présents, le contrepoids (5) est constitué d'un matériau ferromagnétique et le premier et le deuxième aimants permanents (6.1, 6.2) sont disposés en face l'un de l'autre à l'extérieur de la plage d'angles de pivotement (α) et l'une des au moins une surface magnétique (14) du premier aimant permanent (6.1) est disposée en face d'une partie de surface d'une surface périphérique extérieure du contrepoids (5) dans la position ouverte et l'une des au moins une surface magnétique (14) du deuxième aimant permanent (6.2) est disposée en face d'une autre partie de surface de la surface périphérique extérieure du contrepoids (5) dans la position fermée.

6. Dispositif d'obturateur de caméra selon l'une quelconque des revendications 2, 3, 4 ou 5, **caractérisé**
**en ce que** la surface magnétique (14) respective et la partie de surface respective de la surface périphérique extérieure du contrepoids (5) ou la surface frontale (13.1) respective enferment l'une avec l'autre, dans la position ouverte et dans la position fermée, un interstice (12) respectif qui est plus étroit que toute distance du contrepoids (5) par rapport au premier ou au deuxième aimant permanent (6.1, 6.2) pendant le mouvement entre la position ouverte et la position fermée.

7. Dispositif d'obturateur de caméra selon l'une quelconque des revendications précédentes, **caractérisé**
**en ce que** le contrepoids (5) contient une deuxième lame d'obturation (7).

8. Dispositif d'obturateur de caméra selon les revendications 5 et 7, **caractérisé en ce que** la deuxième lame d'obturation (7) est solidaire d'une tige de liaison (9) guidée linéairement, qui forme le contrepoids (5) conjointement avec la deuxième lame d'obturation (7) et qui est logée de manière rotative à l'extrémité côté sortie (4.2) du levier à deux bras (4).

9. Dispositif d'obturateur de caméra selon la revendication 1, **caractérisé en ce que** l'actionneur électromagnétique (2) est un solénoïde de levée (8), avec une bobine (8.1) et un noyau d'induit ferromagnétique ou à aimant permanent (8.2.1), qui est monté sur un coulisseau (8.2), le coulisseau (8.2) constituant la partie mobile.

10. Dispositif d'obturateur de caméra selon la revendication 1, **caractérisé en ce que** le rapport entre une longueur de course de l'actionneur électromagnétique (2) et une longueur de construction du dispositif d'obturateur de caméra dans la direction de la longueur de course est avantageusement supérieur à 1:2.

11. Dispositif d'obturateur de caméra selon la revendication 10, **caractérisé en ce que** la bobine (8.1) présente un corps de bobine (8.1.1) et un enroulement (8.1.2) au moins biphasé.

12. Dispositif d'obturateur de caméra selon la revendication 11, **caractérisé en ce que** le corps de bobine (8.1.1) constitue un guide de coulissement linéaire (10) pour le coulisseau (8.2).

13. Dispositif d'obturateur de caméra selon la revendication 9, **caractérisé en ce qu'**il existe une enceinte ferromagnétique (11) qui entoure la bobine (8.1), ce qui permet d'augmenter un flux magnétique qui se forme à l'intérieur de la bobine (8.1) et de réduire un champ de dispersion qui se forme autour de la bobine (8.1).
